# FASCICULE DE BREVET EUROPEEN

(11) **EP 1 717 173 B1**
(45) Date de publication et mention de la délivrance du brevet: **09.07.2008**
(21) Numéro de dépôt: 06290692.0
(22) Date de dépôt: 28.04.2006
(51) Int. Cl.: B65G 69/18, B63B 17/02

(54) **Procédé de chargement en vrac de produits pulvérulents et dispositif pour sa mise en oeuvre**
Verfahren zum Verladen von pulverförmigen Schüttgütern und Vorrichtung dafür
Process for loading bulk powders and device therefor

(30) Priorité: 29.04.2005 FR 0504424
(43) Date de publication de la demande: 02.11.2006
(73) Titulaire: Euro-Silo N.V., 9000 Gent (BE); Roquette Frères, 62136 Lestrem (FR)
(72) Inventeur: Matthys, Daniël, 9940 Ertvelde (BE); Seynaeve, Marc, 8530 Harelbeke (BE); D'Hulster, Carlos, 9041 Oostakker (BE); Buysse, Marnix, 9080 Zaffelare (BE); Cousin, Laurent, 59850 Nieppe (FR); Delville, Bernard, 59670 Oxelaere (FR)
(74) Mandataire: Perin, Georges

(56) Documents cités:
- WO-A-99/55578

## Description

La présente invention concerne un procédé de chargement en vrac de produits pulvérulents, notamment de haute qualité, et un dispositif pour sa mise en oeuvre.

Les systèmes actuels pour le transport en vrac de produits pulvérulents exigent des bateaux et des installations spécialement conçus pour ce type de produit. Il faut que ces produits, par exemple du ciment, soient transportés régulièrement, en grande quantité, pour que les installations pour les transporter et accueillir soient rentables.

Il n'existe à ce jour aucun système pour charger en vrac des produits pulvérulents, notamment de haute qualité et de haute valeur, dans des bateaux du type polyvalent. De tels produits, par exemple des produits semi-finis ont une haute valeur et exigent un niveau de qualité supérieur aux simples matières premières. Typiquement, ces produits sont transportés en quantités limitées à quelques milliers de tonnes.

Pour conserver aux produits transportés leur qualité de base, ces produits de haute valeur sont actuellement transportés en sacs de polypropylène (de 50 kg à 1000 kg selon les exigences du client). Ce mode de transport exige beaucoup de manipulations dans la chaîne logistique et par conséquent provoque des frais considérables entre l'usine de fabrication et les locaux du client final.

En outre, après usage pour le transport, les sacs doivent être récupérés ou détruits, ce qui provoque des frais supplémentaires qu'il conviendrait de limiter ou éliminer.

Il serait donc souhaitable de diminuer les coûts de la logistique de transport de tels produits, afin notamment de pouvoir exporter des produits pulvérulents vers de nouveaux marchés à des prix compétitifs.

Ces cargaisons de produits pulvérulents devraient être transportées notamment par bateaux ou trains tout en évitant au maximum la déperdition des produits transportés.

En outre la quantité et la qualité contractuelles ainsi que la traçabilité entre le producteur et le client devraient être garantis.

Les produits transportés peuvent être extrêmement pulvérulents et ainsi créer une poussière importante lors du chargement et déchargement.

Un transbordement devrait être exécuté sans poussière afin de respecter les prescriptions environnementales et les normes en vigueur.

Indépendamment du fait d'éviter les déperditions coûteuses, les produits ainsi transportés peuvent avoir une certaine toxicité, ce qui est une raison supplémentaire pour les confiner lors des opérations de manutention.

En outre, certains produits sont sensibles à l'eau par exemple parce qu'ils forment une pâte, ou hygroscopiques et le chargement des produits pulvérulents devrait en conséquence être réalisé totalement au sec.

Afin de conserver la qualité d'origine, ces produits sont souvent transportés à des bateaux par camion-citeme et la technique de chargement devrait pouvoir être compatible avec l'utilisation de tels camions.

Le transfert du produit transporté depuis les camions se fait par injection d'air comprimé. Par contre la structure d'un bateau ne supporte qu'une légère surpression. Il faut donc notamment éliminer la surpression dans la cale du bateau en évitant la sortie de la poussière.

Par ailleurs, l'immobilisation de camions-citernes et de cargos est extrêmement coûteuse et ainsi le chargement devrait être réalisé dans le délai le plus bref possible.

Actuellement, il n'existe pas de procédé permettant le chargement rapide de matières pulvérulentes. Il n'existe pas non plus de procédé permettant le chargement de matières pulvérulentes en vrac sous la pluie.

Il serait donc souhaitable de disposer d'un procédé et d'un dispositif permettant le chargement de matières pulvérulentes répondant à tout ou partie du cahier de charges ci-dessus.

Or après de longues recherches la demanderesse a mis au point un procédé de chargement en vrac de produits pulvérulents et un dispositif pour sa mise en oeuvre donnant toute satisfaction.

C'est pourquoi la présente demande a pour objet un procédé de chargement d'un conteneur de transport avec un produit pulvérulent en vrac, caractérisé en ce que ledit conteneur est clos et comporte
au moins une bouche d'alimentation de section transversale supérieure ou égale à 50 cm², avantageusement supérieure ou égale à 60 cm², de préférence supérieure ou égale à 70 cm², notamment supérieure ou égale à 80 cm², tout particulièrement supérieure ou égale à 90 cm²,
au moins une bouche d'évacuation de section transversale supérieure ou égale à 150 cm², avantageusement supérieure ou égale à 200 cm², de préférence supérieure ou égale à 250 cm², notamment supérieure ou égale à 300 cm², tout particulièrement supérieure ou égale à 350 cm², ladite bouche d'évacuation comportant un système de filtration, tel un filtre, pour retenir les particules de dimension supérieure à 20 µm, avantageusement supérieure ou égale à 10 µm, de préférence supérieure ou égale à 5 µm, et étant munie d'une protection contre les intempéries comme la pluie,
et dans lequel
on connecte la ou les bouches d'alimentation à un conduit d'alimentation d'un produit pulvérulent en vrac, et
on transvase dans le conteneur ledit produit pulvérulent en vrac à partir d'une source de produit pulvérulent en vrac.

La protection contre les intempéries de la bouche d'évacuation peut être obtenue par un emplacement judicieux de celle-ci à l'abri. Par exemple si le conteneur est la cale d'un navire, de nombreux emplacements d'un navire sont appropriés pour installer la bouche d'évacuation à l'abri. La bouche d'évacuation peut être installée sur une tubulure débouchant dans le conteneur. Le filtre peut être installé à une extrémité du conduit ou à un emplacement quelconque entre ces extrémités, étant rappelé que le filtre doit pouvoir être remplacé ou lavé.

La demanderesse dans ses recherches a aussi conçu une couverture permettant de mettre en oeuvre le procédé ci-dessus en utilisant non pas un conteneur de transport clos équipé à cette fin mais un conteneur ouvert comme une cale de navire. Le procédé de l'invention peut ainsi être mis en oeuvre avec des conteneurs polyvalents.

C'est pourquoi la présente demande a aussi pour objet une couverture de préférence amovible pour un conteneur de transport ouvert caractérisée en ce qu'elle comprend au moins une plaque profilée rigide comportant au moins une bouche d'alimentation de section transversale supérieure ou égale à 50 cm², avantageusement supérieure ou égale à 60 cm², de préférence supérieure ou égale à 70 cm², notamment supérieure ou égale à 80 cm², tout particulièrement supérieure ou égale à 90 cm²,
au moins une bouche d'évacuation de section transversale supérieure ou égale à 150 cm², avantageusement supérieure ou égale à 200 cm², de préférence supérieure ou égale à 250 cm², notamment supérieure ou égale à 300 cm², tout particulièrement supérieure ou égale à 350 cm², ladite bouche d'évacuation comportant un système de filtration, tel un filtre, pour retenir les particules de dimension supérieure à 20 µm, avantageusement supérieure ou égale à 10 µm, de préférence supérieure ou égale à 5 µm, et étant munie d'une protection contre les intempéries comme la pluie,
des moyens pour étanchéifier la jointure entre le bord du conteneur et la plaque profilée.

Dans la présente demande et dans ce qui suit, le terme « produit pulvérulent» désigne un produit poudreux ou produisant de la poussière lors de sa manutention, par exemple de la farine, du talc, du ciment, des bentonites, de l'amidon, de préférence des poudres de toutes sortes, et particulièrement du gluten comme le gluten de mais et notamment le gluten de blé.

Le terme "conteneur de transport" désigne un récipient d'un volume notamment supérieur à 10 m³ avantageusement supérieur ou égal à 40 m³, de préférence supérieur ou égal à 100 m³ fermé et muni d'au moins un accès pour son chargement/déchargement. Il s'agit par exemple d'un cadre de transport, notamment d'un wagon ou d'un tombereau de train, particulièrement d'une cale de navire. Le conteneur de transport peut être clos mais aussi, comme on l'a vu, désigner aussi un récipient ouvert sur sa partie supérieure.

Le terme "plaque profilée rigide" désigne une plaque dont l'épaisseur et la forme du profil permettent à un homme et de préférence deux ou trois hommes de 120 kg de marcher sur ladite plaque profilée reposant sur ses côtés les plus éloignés, comme représenté sur les figures, sans que celle-ci ne se plie en deux. Le profil peut par exemple être ondulé ou consister en une série de segments droits séparés par des parties en forme de U, V ou W.

Le terme "amovible" signifie déplaçable, de préférence directement sans démontage, éventuellement après déblocage d'un dispositif rapide de blocage ou déblocage comme une fermeture à sauterelle.

Les moyens pour étanchéifier la jointure entre le bord du conteneur et la plaque profilée peuvent être fixés à la couverture ou séparés et utilisés au moment de la mise en oeuvre du procédé.

Les valeurs de granulométrie indiquées ci-dessus se réfèrent à un résultat obtenu par tamisage à l'aide d'un tamis en toile métallique tissée à mailles carrées et signifient que au moins 95% en poids, de préférence 99% au moins en poids des particules sont arrêtées par le filtre et ont donc une taille supérieure à celle indiquée, pour les particules de dimension supérieure ou égale à 20 µm. Pour les particules de dimension inférieure à 20 µm, on a utilisé la technique de diffraction laser dans les conditions préconisées par le constructeur de l'appareil utilisé, par exemple un modèle LASER LS de Coulter®.

Dans des conditions préférentielles de mise en oeuvre de l'invention, la plaque profilée a une surface comprise entre 10 et 35 m², de préférence comprise entre 10 et 40 m², notamment comprise entre 10 et 50 m², tout particulièrement comprise entre 10 et 80 m².

On choisira avantageusement des plaques profilées rectangulaires, notamment de largeur de 1 à 5 m, de préférence de 1,5 à 4,5 m, notamment de 2 à 4 m, tout particulièrement de 2,5 à 3,5 m, et de longueur de 5 à 20 m, notamment de 6 à 15 m, tout particulièrement de 7 à 9 m.

Dans d'autres conditions préférentielles de mise en oeuvre de l'invention, la plaque profilée est au moins partiellement recouverte d'une grille (ou grillage ou plaque à perforations multiples pour l'alléger) pour permettre à un homme de marcher à plat sur ladite plaque profilée.

La bouche d'alimentation est avantageusement munie d'un système de connexion rapide à un tuyau d'alimentation.

On trouve de préférence au moins deux bouches d'alimentation par plaque, installées avantageusement dans la longueur de la plaque. Celles-ci sont de préférence prévues au premier quart et aux trois quarts de la longueur de la plaque. Ainsi, le remplissage du conteneur est équilibré.

La bouche d'évacuation comprend avantageusement une cheminée prévue de préférence verticalement dans laquelle est installé un système de filtration comme un filtre. On peut prévoir une seule, ou 2, ou plus de 2 bouches d'évacuation. Cette bouche servant à l'évacuation du gaz (comme l'air) présent dans le conteneur et du gaz (comme l'air) utilisé pour le chargement, elle est avantageusement installée dans le haut, à la moitié, aux trois quarts, aux neuf dixièmes ou plus de la hauteur du containeur, par exemple sur le couvercle du conteneur, pour permettre un remplissage maximum.

Le système de filtration comprend de préférence un filtre. Le filtre est avantageusement un filtre en papier plissé, notamment de forme cylindrique. De tels filtres utilisables sont par exemple ceux utilisés dans l'industrie automobile comme filtres à air, ou pour les modèles de grande taille, par exemple 1 m de haut pour un diamètre de 20 cm, dans les piscines comme filtre à eau. Chaque filtre autorise de préférence un débit d'air d'au moins 5 m³ par minute, avantageusement 10 m³ par minute, de préférence au moins 20 m³ par minute, notamment au moins 50 m³ par minute, tout particulièrement au moins 100 m³ par minute. Un pré filtre peut être prévu.

Le débit d'air peut évidemment diminuer pendant l'utilisation du filtre, au fur et à mesure de son colmatage.

Le système de filtration peut aussi comprendre un ou plusieurs cyclones.

Dans encore d'autres conditions préférentielles de mise en oeuvre de l'invention, la plaque profilée ci-dessus comprend en outre des moyens de manipulation et de levage desdites plaques profilées.

Dans encore d'autres conditions préférentielles de mise en oeuvre de l'invention, la plaque profilée ci-dessus comprend en outre des moyens de gerbage desdites plaques. Ces moyens peuvent notamment comprendre des entretoises comprenant un tube installé verticalement sur la surface de la plaque, surmonté d'une plaquette. Ce tube débouche avantageusement dans la plaquette pour permettre l'insertion de poteaux pour l'installation d'une main courante pour assurer les déplacements du personnel sur la plaque.

Les couvertures pour conteneur objet de la présente invention possèdent de très intéressantes qualités.

Elles permettent notamment:
- D'éviter au maximum la déperdition des produits transportés
- De réaliser totalement au sec les opérations de transfert et donc de garder intacte la qualité du produit transporté
- De réaliser les opérations de transfert sans poussière en respectant les prescriptions environnementales
- De réaliser les opérations de transfert sans risque de contamination par un autre produit
- De pouvoir réaliser les opérations de transfert par plusieurs camions-citerne en même temps qui permet un chargement rapide.
- Le temps nécessaire pour installer les plaques sur un conteneur est très limité
- L'assistance d'un technicien est minimale
- L'opération de chargement du conteneur est indépendante des conditions météo et peut donc être organisée à tout moment
- Le temps d'immobilisation des camions-citernes et du porte conteneurs notamment d'un navire est minimal
- Le transport ainsi réalisé en vrac est plus économique que le transport en sacs.

Ces propriétés sont illustrées ci-après dans la partie expérimentale. Elles justifient l'utilisation des éléments de couverture d'un conteneur ci-dessus décrits, dans le chargement notamment de matières pulvérulentes.

C'est pourquoi la présente demande a aussi pour objet un procédé de chargement d'un conteneur avec un produit pulvérulent en vrac, caractérisé en ce que
on installe au moins une plaque ci-dessus et optionnellement un joint d'étanchéité sur l'ouverture d'un conteneur ouvert pour constituer un espace clos,
on connecte la ou les bouches d'alimentation à un conduit d'alimentation d'un produit pulvérulent en vrac, et
on transvase dans le conteneur ledit produit pulvérulent en vrac à partir d'une source de produit pulvérulent en vrac.

De préférence tout ou partie des dispositifs mis en oeuvre: camions, plaques, et conteneur, notamment cale de navire sont protégés de l'électricité statique par installation d'au moins un câble équipotentiel connecté à la masse et à la terre.

Dans des conditions préférentielles de mise en oeuvre du procédé ci-dessus, le joint d'étanchéité comprend ou est essentiellement constitué de plaques ou rubans de mousse synthétique. Un tel joint est inutile si la plaque ci-dessus est ajustée au conteneur. En particulier, la plaque peut être fixée à demeure sur l'ouverture du conteneur.

Le transvasement peut se faire par simple gravité. Cependant, dans d'autres conditions préférentielles de mise en oeuvre de l'invention, on utilise pour accélérer le chargement de l'air pulsé par exemple à l'aide d'une pompe ou à l'aide d'air comprimé.

En général, en vue de décharger la cargaison, le fond des cales est prévu non pas plat, mais incliné en forme d'un V au fond duquel est installé un dispositif tel une vis sans fin convoyant ladite cargaison vers un dispositif de déchargement comprenant habituellement au moins un tuyau de déchargement. Ainsi, en fin de déchargement, ladite cargaison se concentre et les pertes sont limitées. Cependant, les bouches d'alimentation peuvent également être utilisées pour le déchargement de tout ou partie de la cargaison. A cette fin, elles peuvent être munies d'au moins un tuyau plongeur, notamment d'une longueur suffisante pour atteindre le fond de cale.

Le déchargement peut être réalisé à l'aide d'une pompe.

Les conditions préférentielles de mise en oeuvre des éléments de couverture d'un conteneur ci-dessus décrites s'appliquent également aux autres objets de l'invention visés ci-dessus, notamment aux procédés de chargement et déchargement d'un conteneur avec un produit pulvérulent en vrac ci-dessus décrits.

L'invention sera mieux comprise si l'on se réfère aux dessins annexés sur lesquels
- la figure 1 représente une vue de dessus d'une plaque profilée selon l'invention
- la figure 2 représente une vue de profil et en coupe de la figure 1 selon AA'
- la figure 3 représente une vue de profil et en coupe de la figure 1 selon BB'
- la figure 4 représente une vue de dessus d'un processus de chargement.

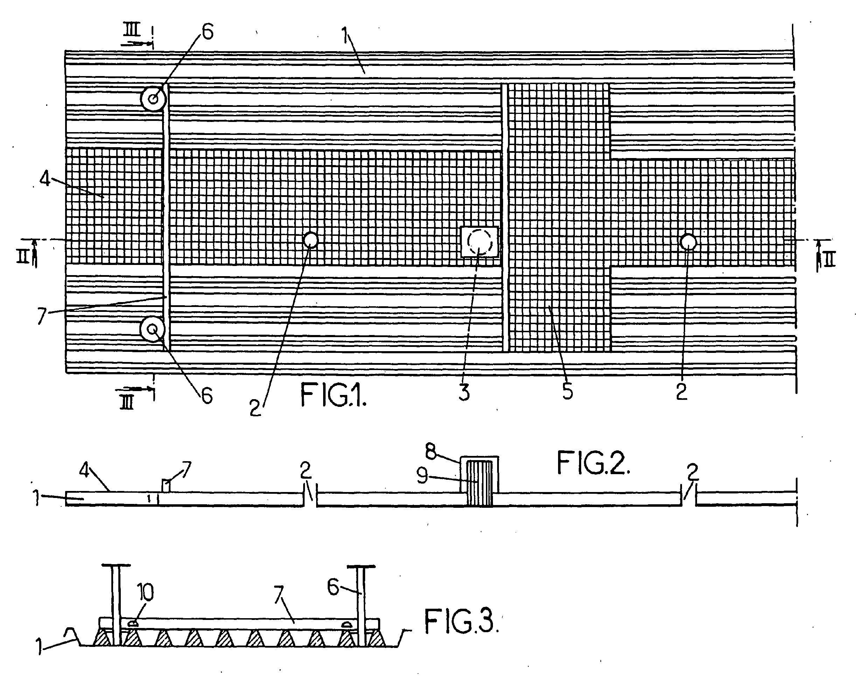

La figure 1 est une vue de dessus d'une plaque profilée selon l'invention. Cette plaque 1, réalisée en tôle ondulée d'une largeur de 3,5 m et d'une longueur de 8 m, comprend deux bouches d'alimentation 2, dotées d'un dispositif d'accouplement à un tuyau standard de déchargement d'un camion-citerne.

On distingue également une bouche d'évacuation 3, sur lesquelles sont installés des filtres à particules sèches du type filtre multiplis. Le capot de protection n'a pas été représenté.

Une bande de grillage 4 a été installé sur le haut des ondulations de la tôle, au milieu de la plaque dans le sens de la longueur de la plaque, pour permettre aux opérateurs d'accéder aux bouches d'alimentation 2 pour monter et démonter les tuyaux d'alimentation, ainsi que changer ou nettoyer les filtres en tant que de besoin.

D'autres bandes de grillage 5 sont également installées dans la largeur de la plaque pour faciliter les déplacements perpendiculairement à la direction ci-dessus.

Quatre entretoises 6 ont été prévues vers les extrémités longitudinales de la plaque pour permettre le gerbage des plaques entre elles. Ces entretoises 6 sont d'une hauteur suffisante pour protéger les dispositifs de connexion des tuyaux ainsi que les capots de protection des filtres à particules solides. Cette hauteur suffisante permet également aux entretoises 6 de remplir une seconde fonction : elles permettent l'installation de mains courantes (non représentées) permettant à l'équipage de se tenir dans des conditions de navigation difficiles.

Le poids des plaques 1 selon l'invention est suffisant pour conserver à celles-ci la position dans laquelle elles ont été installées sur les cales, même en cas de roulis et/ou tangage importants.

Des barres 7 munies d'anneaux, installées vers les extrémités longitudinales de la plaque, autorisent le levage et la manutention d'une plaque 1 à l'aide d'une grue portuaire ou de la grue de service du navire, si une telle grue est installée.

Sur la figure 2, qui est une coupe longitudinale selon II II de la figure 1, on distingue sensiblement les mêmes éléments que sur la figure 1. On a représenté schématiquement un capot de protection 8 d'un filtre 9 à particules solides.

Sur la figure 3, qui est une coupe selon III III de la figure 1, on distingue en outre les ondulations de la tôle constituant la plaque. Un recouvrement partiel des plaques installées côte à côte est suffisant pour procurer l'étanchéité souhaitée pour éviter les pertes de matière transportée.

On distingue aussi plus nettement deux entretoises 6 prévues pour le gerbage des plaques. Bien que la barre de manutention 7 ne soit pas dans le même plan, on l'a représentée en arrière-plan sur cette figure. Au lieu de prévoir des anneaux, sur cette variante, la barre est perforée 10 pour permettre l'installation de crochets de levage.

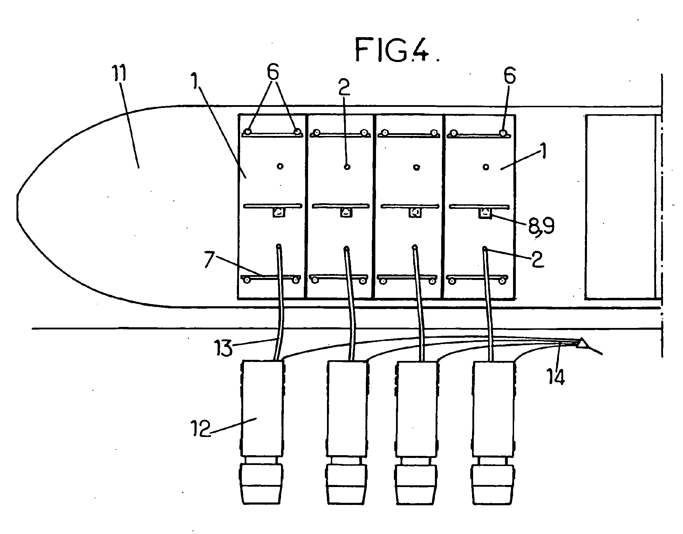

Enfin, la figure 4 schématise le chargement d'un cargo 11 simultanément par 4 camions-citernes 12. On peut distinguer en particulier les tuyaux de chargement 13 connectés entre des bouches d'alimentation 2 de quatre plaques 1 selon l'invention et celles des camions-citernes 12 mis à la terre par des câbles 14.

### Exemple de mise en oeuvre :

On a utilisé 6 telles plaques pour couvrir les cales d'un navire cargo de 1350 m³. La couverture a été réalisée par deux marins. La connexion des tuyaux de chargement aux citemes des camions a été réalisée par les chauffeurs, et la connexion des tuyaux aux bouches d'alimentation a été réalisée par deux marins. Le transbordement d'une cargaison de 750 tonnes de gluten de blé à partir de 36 camions-citerne a pu ainsi être réalisé en 6,0 heures en effectuant le transfert par air pulsé. Malgré la pluie qui s'est mise à tomber pendant 3 heures, la bonne marche du transbordement n'a pas été affectée et le produit a été transféré au sec. En effet, aucune présence de grumeaux n'a été constatée dans la cale ou à destination.

## Revendications

1. Une couverture pour un conteneur de transport ouvert **caractérisée en ce qu'**elle comprend au moins une plaque profilée rigide (1) comportant au moins une bouche d'alimentation (2) de section transversale supérieure ou égale à 50 cm²,
au moins une bouche d'évacuation (3) de section transversale supérieure ou égale à 50 cm², ladite bouche d'évacuation (3) comportant un système de filtration (9) pour retenir les particules de dimension supérieure à 20 µm et étant munie d'une protection (8) contre les intempéries comme la pluie,
des moyens pour étanchéifier la jointure entre le bord du conteneur et la plaque profilée (1).

2. Une couverture selon la revendication 1, **caractérisée en ce que** la au moins une plaque profilée rigide (1) a une surface comprise entre 10 et 35 m².

3. Une couverture selon la revendication 1 ou 2, **caractérisée en ce que** la au moins une plaque profilée rigide (1) est rectangulaire.

4. Une couverture selon la revendication 3, **caractérisée en ce que** sa largeur est de 1,5 à 4,5 m, et sa longueur de 5 à 12 m.

5. Une couverture selon l'une des revendications 1 à 4, **caractérisée en ce que** la au moins une plaque profilée rigide (1) est au moins partiellement recouverte d'une grille (4, 5) pour permettre à un homme de marcher à plat sur ladite plaque profilée.

6. Une couverture selon l'une des revendications 1 à 5, **caractérisée en ce qu'**il que la bouche d'alimentation (2) est munie d'un système de connexion rapide à un tuyau d'alimentation (13).

7. Une couverture selon l'une des revendications 1 à 6, **caractérisée en ce que** la au moins une plaque profilée (1) comprend des moyens de manipulation et de levage (10) de ladite plaque profilée.

8. Une couverture selon l'une des revendications 1 à 7, **caractérisée en ce que** la au moins une plaque profilée comprend des moyens de gerbage (6) de telles plaques profilées comprenant des entretoises.

9. Une couverture selon l'une des revendications 1 à 8, **caractérisée en ce qu'**elle est amovible.

10. Un procédé de chargement d'un conteneur de transport avec un produit pulvérulent en vrac, **caractérisé en ce que** ledit conteneur est clos et comporte
au moins une bouche d'alimentation (2) de section transversale supérieure ou égale à 50 cm²,
au moins une bouche d'évacuation (3) de section transversale supérieure ou égale à 50 cm², ladite bouche d'évacuation (3) comportant un système de filtration (9) pour retenir les particules de dimension supérieure à 20 µm et étant munie d'une protection (8) contre les intempéries comme la pluie,
et dans lequel
on connecte la ou les bouches d'alimentation à un conduit d'alimentation d'un produit pulvérulent en vrac, et
on transvase dans le conteneur ledit produit pulvérulent en vrac à partir d'une source de produit pulvérulent en vrac.

11. Un procédé de chargement d'un conteneur de transport avec un produit pulvérulent en vrac, **caractérisé en ce que**
on installe au moins une couverture telle que définie à l'une des revendications 1 à 8 et optionnellement un joint d'étanchéité sur l'ouverture d'un conteneur de transport ouvert pour constituer un espace clos,
on connecte la ou les bouches d'alimentation (2) à un conduit d'alimentation (13) d'un produit pulvérulent en vrac, et
on transvase dans le conteneur ledit produit pulvérulent en vrac à partir d'une source de produit pulvérulent en vrac (12).

12. Un procédé de chargement selon la revendication 11, **caractérisé en ce que** le joint d'étanchéité comprend ou est essentiellement constitué de plaques ou rubans de mousse synthétique.

13. Un procédé de chargement selon la revendication 12, **caractérisé en ce que** l'on utilise pour accélérer le chargement de l'air pulsé par exemple à l'aide d'une pompe ou à l'aide d'air comprimé.

14. Un conteneur de transport clos comportant
au moins une bouche d'alimentation (2) de section transversale supérieure ou égale à 50 cm²,
au moins une bouche d'évacuation (3) de section transversale supérieure ou égale à 50 cm², ladite bouche d'évacuation (3) comportant un système de filtration (9) pour retenir les particules de dimension supérieure à 20 µm et étant munie d'une protection (8) contre les intempéries comme la pluie.

## Claims

1. A cover for an open transport container **characterised in that** it comprises at least one rigid profiled plate (1) comprising at least one supply orifice (2) of a cross-section of greater than or equal to 50 cm²,
at least one discharge orifice (2) of a cross-section of greater than or equal to 50 cm², said discharge orifice (3) comprising a filtration system (9) for retaining the particles of a dimension of greater than 20 µm and being provided with a protection (8) against inclemencies of the weather like rain, and
means for sealing off the join between the edge of the container and the profiled plate (1).

2. A cover according to claim 1 **characterised in that** the at least one rigid profiled plate (1) is of an area of between 10 and 35 m².

3. A cover according to claim 1 or claim 2 **characterised in that** the at least one rigid profiled plate (1) is rectangular.

4. A cover according to claim 3 **characterised in that** it is from 1.5 to 4.5 m in width and from 5 to 12 m in length.

5. A cover according to one of claims 1 to 4 **characterised in that** the at least one rigid profiled plate (1) is at least partially covered by a grid (4, 5) to permit a man to walk flat on said profiled plate.

6. A cover according to one of claims 1 to 5 **characterised in that** the supply orifice (2) is provided with a system for rapid connection to a supply pipe (13).

7. A cover according to one of claims 1 to 6 **characterised in that** the at least one profiled plate (1) comprises means (10) for handling and lifting said profiled plate.

8. A cover according to one of claims 1 to 7 **characterised in that** the at least one profiled plate comprises means (6) for stacking such profiled plates comprising spacers.

9. A cover according to one of claims 1 to 8 **characterised in that** it is removable.

10. A process for loading a transport container with a bulk powder product **characterised in that** said container is closed and comprises
at least one supply orifice (2) of a cross-section of greater than or equal to 50 cm²,
at least one discharge orifice (2) of a cross-section of greater than or equal to 50 cm², said discharge orifice (3) comprising a filtration system (9) for retaining the particles of a dimension of greater than 20 µm and being provided with a protection (8) against inclemencies of the weather like rain,
and in which
the supply orifice or orifices is or are connected to a supply conduit for a bulk powder product, and
said bulk powder product is poured into the container from a source of bulk powder product.

11. A process for loading a transport container with a bulk powder product **characterised in that**
at least one cover as defined in one of claims 1 to 8 and optionally a sealing joint are installed on the opening of an open transport container to constitute a closed space,
the supply orifice or orifices (2) is or are connected to a supply conduit (13) for a bulk powder product, and
said bulk powder product is poured into the container from a source (12) of bulk powder product.

12. A loading process according to claim 11 **characterised in that** the sealing joint comprises or is essentially formed by plates or strips of synthetic foam.

13. A loading process according to claim 12 **characterised in that** pulsed air is used for accelerating the loading operation, for example by means of a pump or by means of compressed air.

14. A closed transport container comprising
at least one supply orifice (2) of a cross-section of greater than or equal to 50 cm², and
at least one discharge orifice (2) of a cross-section of greater than or equal to 50 cm², said discharge orifice (3) comprising a filtration system (9) for retaining the particles of a dimension of greater than 20 µm and being provided with a protection (8) against inclemencies of the weather like rain.

## Patentansprüche

1. Abdeckung für einen offenen Transportcontainer, **gekennzeichnet durch** mindestens eine starre Profilplatte (1) umfassend mindestens eine Zuführöffnung (2) mit einem Querschnitt von mindestens 50 cm²,
mindestens eine Austragsöffnung (3) mit einem Querschnitt von mindestens 50 cm², wobei die genannte Austragsöffnung (3) ein Filtersystem (9) aufweist, um Teilchen mit einer Größe von mehr als 20 µm zurückzuhalten, und mit einem Schutz (8) vor Witterungseinflüssen wie Regen versehen ist,
eine Einrichtung zum Abdichten der Verbindungsstelle zwischen dem Rand des Containers und der Profilplatte (1).

2. Abdeckung nach Anspruch 1, **dadurch gekennzeichnet, dass** die mindestens eine starre Profilplatte (1) eine Fläche zwischen 10 und 35 m² besitzt.

3. Abdeckung nach Anspruch 1 oder 2, **dadurch gekennzeichnet, dass** die mindestens eine starre Profilplatte (1) rechteckig ist.

4. Abdeckung nach Anspruch 3, **dadurch gekennzeichnet, dass** ihre Breite 1,5 bis 4,5 m und ihre Länge 5 bis 12 m beträgt.

5. Abdeckung nach einem der Ansprüche 1 bis 4, **dadurch gekennzeichnet, dass** die mindestens eine starre Profilplatte (1) zumindest teilweise von einem Gitter (4, 5) bedeckt ist, um einem Menschen das ebene Gehen auf der genannten Profilplatte zu ermöglichen.

6. Abdeckung nach einem der Ansprüche 1 bis 5, **dadurch gekennzeichnet, dass** die Zuführöffnung (2) mit einem System zum schnellen Anschließen an ein Zuführrohr (13) versehen ist.

7. Abdeckung nach einem der Ansprüche 1 bis 6, **dadurch gekennzeichnet, dass** die mindestens eine Profilplatte (1) eine Einrichtung zum Handling und zum Heben (10) der genannten Profilplatte umfasst.

8. Abdeckung nach einem der Ansprüche 1 bis 7, **dadurch gekennzeichnet, dass** die mindestens eine Profilplatte eine Stege umfassende Einrichtung (6) zum Stapeln solcher Profilplatten umfasst.

9. Abdeckung nach einem der Ansprüche 1 bis 8, **dadurch gekennzeichnet, dass** sie abnehmbar ist.

10. Verfahren zum Beladen eines Transportcontainers mit einem pulverförmigen Schüttgut, **dadurch gekennzeichnet, dass** der genannte Container geschlossen ist und folgendes aufweist
mindestens eine Zuführöffnung(2) mit einem Querschnitt von mindestens 50 cm²,
mindestens eine Austragsöffnung (3) mit einem Querschnitt von mindestens 50 cm², wobei die genannte Austragsöffnung (3) ein Filtersystem (9) aufweist, um Teilchen mit einer Größe von mehr als 20 µm zurückzuhalten, und mit einem Schutz (8) vor Witterungseinflüssen wie Regen versehen ist,
und bei dem
die Zuführöffnung oder die Zuführöffnungen an eine Leitung zum Zuführen eines pulverförmigen Schüttguts angeschlossen wird bzw. werden, und
das genannte pulverförmige Schüttgut von einer Quelle eines pulverförmigen Schüttguts aus in den Container umgefüllt wird.

11. Verfahren zum Beladen eines Transportcontainers mit einem pulverförmigen Schüttgut, **dadurch gekennzeichnet, dass**
mindestens eine Abdeckung, wie in einem der Ansprüche 1 bis 8 definiert, und optional eine Dichtung an der Öffnung eines offenen Transportcontainers installiert wird bzw. werden, um einen geschlossenen Raum zu bilden,
die Zuführöffnung oder die Zuführöffnungen (2) an eine Leitung zum Zuführen (13) eines pulverförmigen Schüttguts angeschlossen wird bzw. werden, und
das genannte pulverförmige Schüttgut von einer Quelle eines pulverförmigen Schüttguts (12) aus in den Container umgefüllt wird.

12. Verfahren zum Beladen nach Anspruch 11, **dadurch gekennzeichnet, dass** die Dichtung Platten oder Streifen aus synthetischem Schaum umfasst oder im Wesentlichen durch diese gebildet wird.

13. Verfahren zum Beladen nach Anspruch 12, **dadurch gekennzeichnet, dass** zur Beschleunigung der Beladung Luftstöße zum Beispiel mithilfe einer Pumpe oder mithilfe von Druckluft eingesetzt werden.

14. Geschlossener Transportcontainer, umfassend
mindestens eine Zuführöffnung (2) mit einem Querschnitt von mindestens 50 cm²,
mindestens eine Austragsöffnung (3) mit einem Querschnitt von mindestens 50 cm², wobei die genannte Austragsöffnung (3) ein Filtersystem (9) aufweist, um Teilchen mit einer Größe von mehr als 20 µm zurückzuhalten, und mit einem Schutz (8) vor Witterung wie Regen versehen ist.
